# EUROPEAN PATENT APPLICATION

(11) **EP 1 785 654 A1**
(43) Date of publication of application: **16.05.2007**
(21) Application number: 05425787.8
(22) Date of filing: 10.11.2005
(51) Int. Cl.: F16K 31/06, F16K 11/07, F15B 13/044

(54) **A three-way solenoid valve**

(71) Applicant: OIL CONTROL S.p.A., 20122 Milano (IT)
(72) Inventor: Storci, Andrea, 41015 Nonantola (Modena) (IT)
(74) Representative: Gotra, Stefano

(57) **Abstract**

The solenoid valve comprises a slide valve (2) which is slidable internally of a valve body (1a, 1b) and on which mobile anchors (4a, 5a) of a first solenoid (4) and a second solenoid (5) act; a mobile anchor (6a) of a third solenoid (6) and a mobile anchor (7a) of a fourth solenoid (7) act respectively on the mobile anchor (4a) of the first solenoid (4) and the mobile anchor (5a) of the second solenoid (5). A first detent (3a), a second detent (3b) and a third detent (3c), following action of the solenoids, are engaged and maintain the slide valve (2) in stable positions, respectively a central position (2a), a first lateral position (2b) and a second lateral position (2c), even when the solenoids are inactive.

## Description

Three-way solenoids have been used in hydraulic systems or plants for a considerable time. These valves receive four conduits, generally a delivery conduit, a discharge conduit and two further conduits that lead to users. They comprise, briefly, a slide valve which is kept in a central position due to the action of two opposing springs. In the two lateral positions, of delivery and discharge, they are alternatively connected with one or the other of the user conduits; the displacement of the slide valve into one or the other position, respectively to the right or left of the central position, is obtained by the action of two opposite solenoids whose mobile anchors act directly on the slide valve.

The prior art also contains two-way solenoids which receive four conduits, generally a delivery conduit, a discharge conduit and two user conduits; these also comprise a slide valve which is kept in one or the other position by a mechanical stop, known as a detent. The displacement of the slide valve from one to the other position is obtained by the action of two opposite solenoids, whose mobile anchors act directly on the slide valve.

Detent is a term used to indicate a mechanical stop, which is normally in the form of an elastic pawl which engages in a seating, from which it can be disengaged only following a pushing action on the slide valve, which in this case is performed by one of the solenoids.

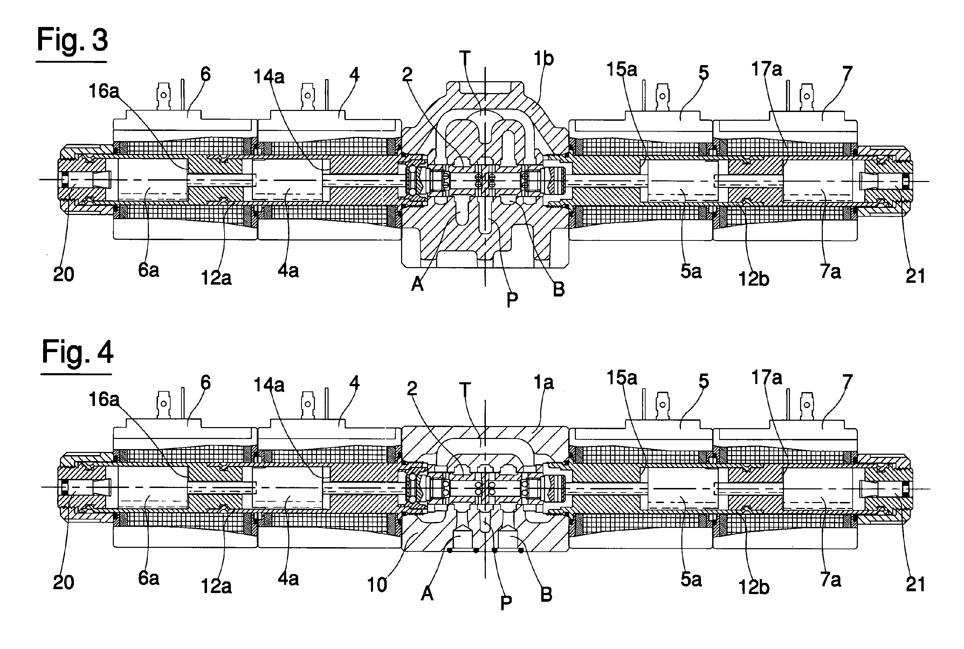

The prior art comprises four-way solenoids with three positions, for example steering devices for self-propelling trucks (such as for example the device in the hydraulic diagram of figure 2), device for moving machine tool organs and other types of devices, in which it is preferable and at times necessary to maintain each of the three positions stable, i.e. the central position and the two lateral positions, even when the solenoid which brought the slide valve into that position is not in operation.

Given that the three-way solenoids of known type are not able to guarantee these functions, in order to satisfy these special needs special hydraulic circuits are used which comprise several solenoids, generally two two-way solenoids arranged in line such as, for example those described herein above. This type of solution however is more expensive, larger and generates more complications in the hydraulic plant, which often has to be housed in cramped spaces and should therefore be as simple as possible.

The main aim of the present invention is to obviate the above-described drawbacks in the prior art by providing a three-way solenoid valve which enables all the positions the valve can achieve in stable positions, even in the absence of solenoid activation.

An advantage of the invention is that it provides a solenoid valve which is particularly simple, economical, small and easily applicable to commonly used hydraulic circuits.

These aims and advantages and more besides are all attained by the invention as it is characterised in the accompanying claims.

Further characteristics and advantages of the present invention will better emerge from the detailed description that follows of some preferred but non-exclusive embodiments of the invention, illustrated purely by way of non-limiting examples in the accompanying figures of the drawings, in which:

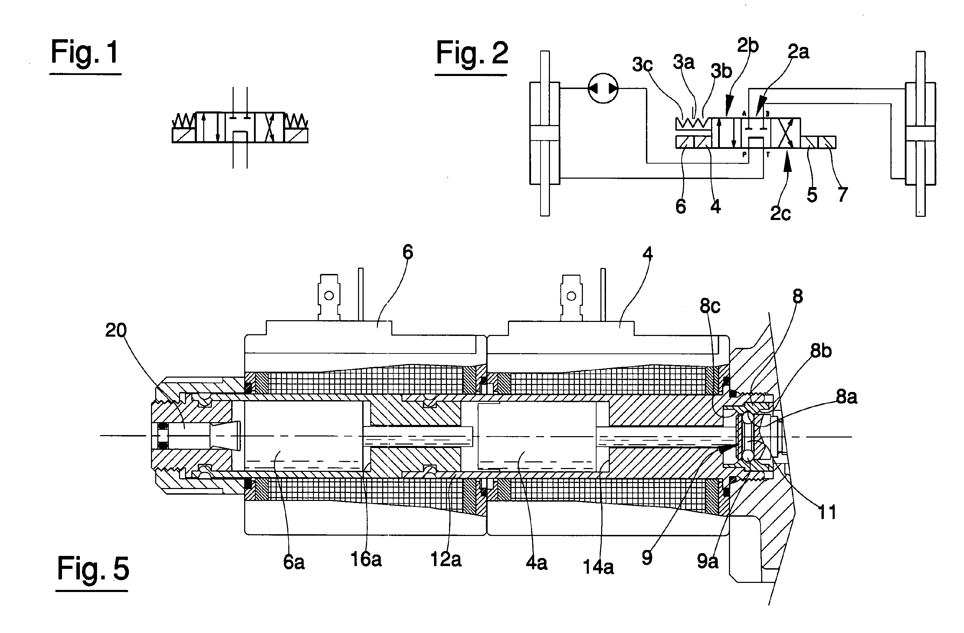

Figure 1 is a hydraulic diagram of a three-way solenoid valve of known type;
Figure 2 is a hydraulic diagram of a three-way solenoid of the invention, applied by way of example to a steering device;
Figure 3 is a vertical elevation section of a first embodiment of the solenoid valve of the invention;
Figure 4 is a vertical elevation section of a second embodiment of the solenoid valve of the invention;
Figure 5 is a vertical elevation section in enlarged scale of a detail of the valves of figure 3 or 4.

The solenoid valve of the invention is a three-position four-way valve of known type in itself, in which a slide valve 2, slidable on command internally of a valve body, respectively 1a and 1b, enables the solenoid to be arranged in one of three positions thereof.

The conduits of the solenoid are normally an entry P, a discharge T and two conduits, respectively A and B, which lead to the users; the discharge T can also be connected, as for example is shown in the diagram of figure 2, to a different discharge chamber which in the illustrated example is a hydraulic cylinder chamber.

Following the commanded sliding of the slide valve, the solenoid can take on: a central position 2a, in which, for example, the conduits are connected P-T, A, B (with A and B closed); a first lateral position 2b in which the conduits are connected P-A, T-B; a second lateral position 2c, in which the conduits are connected P-B, T-A. Briefly, the solenoid has A and B closed in the central position and two lateral positions in which the connections between the delivery, the discharge and the two user conduits are reversed. In the central position, the four conduits P, T, A, B can also be connected among themselves in various ways (for example, open centre, P to T with A and B closed, or in an H connection, or still other connections) so as to realise various hydraulic connections for the various application needs.

The solenoid valve can be realised with the valve body 1a exhibiting a flange 10 for connection of the conduits to a single base of known type, as shown in figure 3, or with the valve body 1b exhibiting attachments for direct connection of the solenoid conduits to conduits of the hydraulic circuit to which the solenoid is to be applied, as shown in figure 4.

The solenoid valve comprises a first solenoid 4 and a second solenoid 5, having mobile anchors 4a and 5a which act on the slide valve 2 in opposite directions to one another, and enable, on command or when they are excited by an electric current, a displacement of the slide valve respectively from the central position 2a to the first lateral position 2b and from the central position 2a to the second lateral position 2c. The solenoid valve of the invention further comprises a third solenoid 6, a mobile anchor 6a of which acts on the mobile anchor 4a of the first solenoid 4 and a fourth solenoid 7, a mobile anchor 7a of which acts on the mobile anchor 5a of the second solenoid 5.

The four solenoids of the solenoid valve are coaxial to one another and are also coaxial to the slide valve 2 of the solenoid valve. The first and second solenoids 4 and 5 are connected to the valve body of the solenoid valve, on opposite sides one to another. The third solenoid 6 is posteriorly connected to the first solenoid 4 while the fourth solenoid 7 is posteriorly connected to the second solenoid 5: the connections between the solenoids 4-6 and 5-7 are realised in such a way that the mobile anchor 6a of the third solenoid 6 and the mobile anchor 7a of the fourth solenoid 7 directly face the mobile anchors 4a and 5a of the solenoids to which the third and fourth solenoids 6, 7 are connected.

Two groups of solenoids, to summarise, are exhibited at the sides of the valve body, the groups of solenoids being respectively constituted by the first and third solenoids 4, 6 and by the second and fourth solenoids 5, 7.

Each group of solenoids exhibits a common internal sleeve, respectively a first sleeve 12a and a second sleeve 12b, internally of each of which run the mobile anchors, respectively 4a-5a and 6a-7a of the two solenoids making up the group; a bush 8, which will be more fully described herein below, is connected to an end of one of the two sleeves 12a or 12b, facing the valve body.

Two front end-run stops are included internally of each sleeve, respectively 14, 16a and 15a, 17a, which limit a run of the respective mobile anchors 4a, 6a, 5a, 7a towards the valve body. Second means for adjusting, respectively 20 and 21, are included on each sleeve, which second means for adjusting are accessible from outside and enable an axial displacement, by mechanical action, of the mobile anchors, respectively 5a and 7a; in the illustrated example the means for adjusting are constituted by threaded screws which can be moved axially.

Means for activating are included, as known, of the electrical currents which are on command sent to the various solenoids, which then cause the sliding of the mobile anchors of the various solenoids.

The means for activating which act on the first solenoid 4 enable the anchor 4a to be displaced (towards the right in figures 3 and 4) in order to displace the slide valve 2 from a central position to the first position 2b. The means for activating acting on the second solenoid 5 enable the anchor 5a (towards the left in figures 3 and 4) to displace the slide valve 2 from the central position to the second position 2c. When the slide 2 is in the second lateral position 2c, the means for activating which act on the third solenoid 6 enable the anchor 6a to act on the slide valve, by means of the mobile anchor 4a of the first solenoid 4, in order to return it to the central position. When the slide valve 2 is in the second lateral position 2c, the means for activating which act on the fourth solenoid 7 enable, the anchor 7a to be activated and to act on the slide valve, via the mobile anchor 5a of the second solenoid 5, in order to return it to the central position.

The solenoid valve of the invention comprises: a first detent 3a which, in absence of a solenoid action, enables the central position 2a of the slide valve 2 to be maintained; a second detent 3b, which, in absence of solenoid action, enables the first lateral position 2b of the slide valve 2 to be maintained; a third detent 3c which, in absence of action of the solenoids, enables the second lateral position 2c of the slide valve 2 to be maintained.

A possible and preferred embodiment of the three described detents comprises a bush 8 which is fixed with respect to the valve body, respectively 1a or 1b, and which is arranged coaxially of the slide valve 2 at an end thereof. The fixed position of the bush 8 with respect to the valve body can be adjusted by first means for adjusting which enable the axial position of the bush to be regulated with respect to the sleeve 12a and 12b; the means for adjusting can be obtained simply by a screw-coupling between bush 8 and sleeve 12a and 12b.

Three internal annular channels 8a, 8b and 8c (which will be better described herein below) are afforded in the bush 8. A stop device 9 is also included, which is made in the end of the slide valve 2 arranged at the bush 8, which stop device 9 is provided with a pawl 9a which can move radially in the end of the slide valve 2; in the illustrated embodiment the pawl 9a is realised, in a known way, by two balls contained in a radial hole that are pushed to exit from the ends of the hole, for a part thereof less than a semisphere, by a spring 11 contained internally of the hole itself.

Following the axial movement of the slide valve, the pawl 9a inserts stably in the channel 8a in order to define the first detent for the central position 2a of the slide valve; following the movements of the slide valve 2 the pawl 9a inserts in the channel 8b in order to define the second detent for the first lateral position 2b of the slide valve 2, or in the third detent for the second lateral position 2c of the slide valve 2. The presence of the detents enables the positions 2a, 2b and 2c of the slide valve 2 to be maintained fixed up until an axial force is created, i.e. the force exerted by the mobile anchors of the solenoids, which cause the exit of the pawl 9a from the channel in which it is inserted.

With the slide valve 2 in the central position 2a in which the conduits P and

T are interconnected while the conduits A and B are closed (central closed position illustrated in the figures of the drawings), the solenoids are inactive and the position is maintained stable by the detent 8a. To reach the first lateral position 2b, with the conduits connected P-A, T-B, the first solenoid 4 is excited, the mobile anchor 4a of which displaces towards the end-run thereof and acts on the slide valve 2, which slide valve 2 is displaced (with reference to the figures of the drawings) towards the right. Following this thrust, the pawl 9a disengages from the channel 8a and engages in the channel 8b, stabilising the first position of the solenoid valve even which the first solenoid 4 is no longer excited. The mobile anchors of the second and fourth solenoids 5 and 7, not being excited, are pushed leftwards, i.e. to the opposite side from the valve body.

The first position is thus maintained up until the fourth solenoid 7 is activated and the mobile anchor 7a thereof pushes on the mobile anchor of the second solenoid 5 which, in turn, pushes on the slide valve 2 in order to disengage the pawl 9a from the channel 8b, which pawl 9a then newly engages in the channel 8a and stably resets the central position of the solenoid valve.

Obviously the same operating system applies to bring the solenoid valve into the second position; in this case the second solenoid 5 is excited, the slide valve 2 is displaced (with reference to the figures of the drawings) towards the left and the pawl 9a engages in the channel 8c, rendering the second position stable. A further excitation of the third solenoid 6 will return the solenoid valve into the central position.

## Claims

1. A three-way solenoid valve with stable switch positions, (P, T, A, B) and comprising: a slide valve (2) which is slidable internally of a valve body (1a, 1b) and can take on a central position (2a) in which conduits can be connected according to a configuration P-T, A, B, a first lateral position (2b) in which the four conduits are connected according to a configuration P-A, T-B, and a second lateral position (2c) in which the four conduits are connected according to a configuration P-B, T-A; a first solenoid (4) and a second solenoid (5) having mobile anchors (4a, 5a) which act on the slide valve (2) in opposite directions to one another and which displace the slide valve (2) respectively from the central position (2a) to the first lateral position (2b) and from the central position (2a) to the second lateral position (2c); **characterised in that** it comprises: a first detent (mechanical stop) (3a) for maintaining the central position of the slide valve (2) stable in absence of action of the solenoids; a second detent (3b) and a third detent (3c) for maintaining respectively the first lateral configuration (2b) and the second lateral configuration (2c) of the slide valve stable in absence of action of the solenoids; a third solenoid (6) having a mobile anchor (6a) that acts on a mobile anchor (4a) of the first solenoid (4); a fourth solenoid (7) having a mobile anchor (7a) that acts on the mobile anchor (5a) of the second solenoid (5); means for activating the third solenoid (6) which, when the slide valve (2) is in the second lateral position (2c), determine an action on the slide valve (2) via the mobile anchor (4a) of the first solenoid (4) in order to return the mobile anchor (4a) into the central position; means for activating the fourth solenoid (7) which, when the slide valve (2) is in the first lateral position (2b), act on the slide valve (2) by means of the mobile anchor (5a) of the second solenoid (5), returning the slide valve (2) into the central position.

2. The solenoid valve of claim 1, **characterised in that** it comprises: a bush (8), fixed to the valve body (1) and arranged coaxially of the slide valve (2) and at and end thereof, in which bush (8) three annular channels (8a, 8b, 8c) are afforded; a stop device (9), realised in an end of the slide valve (2) which end is arranged at the bush (8), a pawl (9a) of which stop device (9) is able to move radially in an end of the slide valve (2) so as to insert, following an axial movement of the slide valve (2), in a first channel (8a) of the three channels to define the first detent for the central position (2a) of the slide valve (2), in a second channel (8b) of the channels to define the second detent for the first lateral position (2b) of the slide valve (2), and in the third channel (8c) of the channels to define the third detent for the second lateral position of the slide valve (2).

3. The solenoid valve of claim 1, **characterised in that**: the first, second, third and fourth solenoids (4, 5, 6, 7) are coaxial to one another and coaxial with the slide valve (2) of the solenoid valve; the first and second solenoids (4, 5) are connected to the valve body (1a, 1b), while the third and fourth solenoids (6, 7) are connected respectively to the first and second solenoids, so that the mobile anchors (6a, 7a) thereof directly face the mobile anchors of the first or second solenoid (4, 5) to which they are connected.

4. The solenoid valve of claim 2, **characterised in that** the first, second, third and fourth solenoids (4, 5, 6, 7) are coaxial to one another and are also coaxial to the slide valve (2) of the solenoid valve; the first and second solenoids (4, 5) are connected to the valve body (1a, 1b); the first and third solenoids (4, 6) are connected to one another, one following another in line, and exhibit a first internal sleeve (12a) which is common to both thereof, internally of which the mobile anchors (4a, 6a) of the first and third solenoids (4, 6) slide; the second and fourth solenoids (5, 7) are connected to one another, one following another in line, on an opposite side of the valve body (1a, 1b) to which the first and third solenoids (4, 6) are connected, and exhibit a common second internal sleeve (12b) internally of which run the mobile anchors (5a, 7a) of the two solenoids (5, 7); the bush (8) being connected to an end of one of the two sleeves (12a, 12b) facing the valve body (1a, 1b); first means for adjusting being provided to regulate an axial position of the bush (8) with respect to the one of the two sleeves (12a, 12b).

5. The solenoid valve of claim 4, **characterised in that**: front end-run stops (14a, 16a, 15a, 17a) are exhibited internally of the first and second sleeves (12a, 12b), which front end-run stops (14a, 16a, 15a, 17a) limit a run of the respective mobile anchors (4a, 6a, 5a, 7a) towards the valve body (1a); second mechanical means for adjusting (20, 21) are provided on each sleeve (12a, 12b), which second mechanical means for adjusting (20, 21) are accessible from outside, and displace the mobile anchors (5a, 7a) and return the slide valve (2) into the central position (2a) thereof.

6. The solenoid valve of claim 1, **characterised in that** the valve body (1a) is provided with a flange (10) for connection of the solenoid conduits to a joint base, of known type.

7. The solenoid valve of claim 1, **characterised in that** the valve body (1b) is provided with attachments for directly connecting the solenoid valve conduits to conduits of a hydraulic circuit for which the solenoid valve is destined.
